(19) Europäisches Patentamt

European Patent Office

Office européen des brevets

(11) Publication number: **0 476 644 A1**

(12) **EUROPEAN PATENT APPLICATION**

(21) Application number: **91115930.9**

(22) Date of filing: **19.09.91**

(51) Int. Cl.⁵: **D06M 11/71,** D06M 11/13,
D06M 13/292, D06M 15/423,
D06M 23/00, D21H 21/34,
D01F 1/07, //D06M101:06,
D06M101:20

(30) Priority: **19.09.90 US 585343**

(43) Date of publication of application:
**25.03.92 Bulletin 92/13**

(84) Designated Contracting States:
**BE DE FR GB IT LU NL**

(71) Applicant: **E.I. DU PONT DE NEMOURS AND
COMPANY
1007 Market Street
Wilmington Delaware 19898(US)**

(72) Inventor: **de la Cruz, Danilo O.
7630 Comanche Drive
Richmond, Virginia 23225(US)**

(74) Representative: **Abitz, Walter, Dr.-Ing. et al
Abitz, Morf, Gritschneder, Freiherr von
Wittgenstein Postfach 86 01 09
W-8000 München 86(DE)**

(54) **Flame retardant nonwoven fabrics.**

㉗ An aqueous flame retardant formulation containing 20 to 35 wt.% non-volatile materials which materials comprise 40 to 50 wt.% water-soluble ammonium salt, such as ammonium phosphate or ammonium bromide; 10 to 20 wt.% water-insoluble organic phosphate, such as tri(t-butyl phenyl) phosphate, tricresylphosphate, trix-ylenylphosphate, or tri(isopropyl phenyl) phosphate; from 10 to 20 wt.% of a stable resin binder such as a melamine formaldehyde resin; and from 20 to 25 wt.% of a non-ionic surfactant such as nonylphenolphenox-ypolyethyloxyethanol is disclosed. The flame retardant formulation is particularly useful for application to nonwoven materials such as paperboard, films and spunbonded polyolefin nonwoven fabrics.

EP 0 476 644 A1

## FIELD OF THE INVENTION

The present invention relates to a flame retardant finish formulation, its preparation and application to nonwoven polyolefin fabrics, films, paper board and similar products.

## BACKGROUND OF THE INVENTION

Nonwoven fabrics formed of polyolefin plexifilaments of the type disclosed in U.S. Patent 3,169,899 (Steuber) are widely used for such applications as envelopes, packaging, banners and disposable protective apparel. A polyethylene film-fibril sheet product suitable for such applications is commercially available from E. I. du Pont de Nemours and Company under the trademark Tyvek®. To date, no successful methods have been disclosed for producing a fire retardant nonwoven fabric formed of polyolefin plexifilaments which is self-extinguishing in the vertical flame test established by the National Fire Protection Association (NFPA) in Test No. 701. Moreover, no successful methods have been disclosed for producing such a fabric which do not greatly alter the physical properties of the fabric material (e.g., tear strength and flexibility).

Examples of references which disclose unsatisfactory methods and/or formulations include:

U.S. Patent 4,863,764 discloses a flame retardant formulation comprising a bromochlorinated paraffin and antimony pentoxide which can be applied at low add on levels to woven fabrics with or without a binder. This formulation is not satisfactory for use on nonwoven polyolefin spunbonded plexifilamentary fabrics because it is too high in viscosity to be applied by conventional surface coating techniques and its application results in a tacky surface. In addition, the use of antimony pentoxide and binder particles does not allow for penetration of the formulation into extremely tight nonwoven film-fibril fabrics such as Tyvek®.

U.S. Patent 4,657,809 discloses a flame retardant formulation for use on foamed and fibrous substrates at high add on levels comprising a halogenated vinyl polymer binder, antimony pentoxide and a halogenated organo phosphonate, organo phosphonate or halogenated fat or oil. High add on levels of antimony pentoxide are cost prohibitive and pose serious environmental and toxicity concerns.

U.S. Patent 3,944,688 discloses flame resistant nonwoven substrates which have been initially treated with a flame retardant formulation comprising an alkyl acrylate or vinyl acetate aqueous dispersion polymer binder and a halogen and/or phosphorus containing flame retardant agent. The substrates are then treated in a second step with a fluorochemical oil and a water repellant substance.

British Patent 2,215,745 discloses an aqueous flame retardant formulation whose principal ingredients include monobasic ammonium phosphate, dibasic ammonium phosphate and ammonium bromide for use on a wide variety of substrates including paper and fabrics.

Japanese Patent Application J89034558-B discloses a flame retardant formulation comprising ammonium bromide, ammonium polyphosphate, aluminum hydroxide, and an organic halide such as tetrabromobisphenol A. The ingredients are mixed with a tackifier, a resin, a surface activator, an organic solvent and water to form a formulation for application to wall material and carpets.

Clearly, what is needed is a flame retardant formulation which passes the vertical flame test when applied to nonwoven substrates, but doesn't adversely affect the physical properties of the nonwoven substrate. In addition, desirable formulations should be able to be applied to nonwoven substrates by conventional coating means and should display adequate adhesion, low tackiness, low toxicity and low cost. Other objects and advantages of the present invention will become apparent to those skilled in the art upon reference to the detailed description of the invention which hereinafter follows.

## SUMMARY OF THE INVENTION

The present invention relates to a flame retardant finish formulation comprising an aqueous mixture of non-volatile materials comprising (a) 40 to 50 wt.% of a water-soluble ammonium salt, (b) 10 to 20 wt.% of a water-insoluble organic phosphate, (c) 10 to 20 wt.% of a stable resin binder, and (d) 20 to 25 wt.% of a non-ionic surfactant. The formulation contains 20 to 35 wt.% non-volatile materials and generally is applied to both sides of a nonwoven substrate, particularly a spunbonded polyolefin plexifilamentary nonwoven fabric. The substrate becomes flame retardant upon evaporation of the water diluent. In a preferred embodiment, the flame retardant finish formulation comprises an aqueous mixture of non-volatile materials comprising (a) 40-50 wt.% ammonium bromide, (b) 10-20 wt.% tricresylphosphate, (c) 10-20 wt.% melamine formaldehyde resin and (d) 20 to 35 wt.% nonylphenolphenoxypolyethyloxyethanol.

The present invention also relates to a flame resistant nonwoven substrate having a dry add on of 15 to 30 weight percent of a flame retardant formulation comprising 40 to 50 weight percent of a water-soluble ammonium salt, 10 to 20 weight percent of a water-insoluble organic phosphate, 10 to 20 weight percent of a stable resin binder and 20 to 25 weight percent of a non-ionic surfactant.

The present invention further relates to a process for preparing a flame retardant formulation. The process comprises the steps of:

(a) mixing a water-insoluble organic phosphate and a non-ionic surfactant;

(b) adding water while continuing mixing;

(c) adding additional non-ionic surfactant while continuing mixing;

(d) adding additional water while continuing mixing;

(e) adding a water-soluble alcohol while continuing mixing;

(f) adding a water-soluble ammonium salt while continuing mixing;

(g) adding a stable binder resin while continuing mixing; and

(h) diluting with water to provide a formulation containing 20 to 35 weight percent non-volatile materials which materials consist essentially of 40 to 50 weight percent water-soluble ammonium salt, 10 to 20 weight percent water-insoluble organic phosphate, 10 to 20 weight percent stable binder resin and 20 to 25 weight percent non-ionic surfactant.

## DETAILED DESCRIPTION OF THE PREFERRED EMBODIMENTS

The flame retardant formulation of the present invention comprises an aqueous mixture containing 20 to 35 wt.%, and preferably about 30 wt.%, non-volatile materials. The water-soluble ammonium salt (a) is preferably ammonium phosphate or ammonium bromide, with ammonium bromide being particularly preferred. Generally, from 40 to 50 wt.%, and preferably about 45 wt.%, (based on non-volatile materials content) of the water-soluble ammonium salt is present in the formulation.

The water-insoluble organic phosphate (b) generally comprises a $C_{3-10}$ alkyl or $C_{6-12}$ aryl phosphate, such as tri(t-butyl-phenyl) phosphate, tricresylphosphate, trixylenyl phosphate or tri(isopropyl-phenyl) phosphate. Tricresylphosphate is the preferred water-insoluble organic phosphate. Generally, the formulation contains 10 to 20 wt.%, and preferably about 17 wt.%, water-insoluble organic phosphate.

The stable binder resin (c) comprises a liquid of a water dispersable fusible thermosetting resin. The preferred resins are the methylated melamine formaldehyde resins. By itself, the liquid has limited solubility in water. Generally, the formulation contains from 10 to 20 wt.%, and preferably about 15 wt%, (based on non-volatile materials content) of binder resin.

The non-ionic surfactant (d) generally is an alkyl polyethyloxyethanol derivative. The preferred non-ionic surfactants are Triton X-100 (an octylphenol ethoxylate non-ionic surfactant commercially available from Rohm & Haas (UK) Ltd.) and Triton N-101 (a nonylphenol ethoxylate non-ionic surfactant (nonylphenolphenoxypolyethyloxyethanol) commercially available from Rohm & Haas (UK) Ltd.), with the latter being especially preferred. Generally, the formulation contains from 20 to 25 wt.%, and preferably about 23 wt.%, (based on non-volatile materials content) non-ionic surfactant. The use of the non-ionic surfactant ensures uniform and stable emulsion of both the water-soluble ammonium salt and the water-insoluble organic phospate.

The formulation of the present invention provides a stable, uniformly dispersed, low viscosity flame retardant finish comprising low cost, low toxicity, water-soluble ammonium salts, organic oil soluble phosphates, a stable binder resin and a non-ionic surfactant. When applied to nonwoven polyolefin, films, paper or other substrates, by a one step process utilizing conventional coating applications (i.e. surface coating or padding), the resulting product is self-extinguishing in the severe vertical flame test developed by the NFPA in Test No. 701. Additionally, the formulation does not alter the key physical properties of the substrate (i.e. water resistance, tear strength, etc.), yet improves the hand and tear resistance of nonwoven polyolefin fabrics.

The aqueous coating formulation generally contains about 20 to 35 wt.%, and preferably about 30 wt.%, non-volatile materials. The preferred viscosity for the aqueous coating formulation is 15-16 seconds using a #2 Zahn cup.

Generally, the aqueous flame retardant formulation is applied on both sides of the substrate using a conventional surface coating technique and becomes effective upon drying to remove the aqueous diluent. Other coating techniques, such as padding or saturation, are also applicable as long as the required level of dry add on is in the range of 15 to 30 wt.% of the substrate.

The sequence of combining the ingredients when forming the inventive formulation is important to achieve the desired results. Thus, the surfactant and water-soluble ammonium salt are added to the water-insoluble organic phosphate and, most importantly, the resin is added after the addition of the water-insoluble organic phosphate. The use of a surfactant, and the absence of any latex binder when mixing the water-soluble ammonium salt and water-insoluble organic phosphate, ensures a uniformly dispersed and stable emulsion of both the water-soluble ammonium salt and water-insoluble organic phosphate. Since nonwoven polyolefin fabrics are hydrophobic, the water-insoluble organic phosphate migrates into the plexifilamentary structures, forming a nonwoven polyolefin fabric as described in U.S. 3,081,519, and contributes to the permanence of the treatment. The stable resin ties the ammonium salt and organic phosphate into the fabric and insures its permanence in the interstices of the fabric. With this combination, a less oily feel (from the organic phosphate and surfactant) and less harsh feel (from the ammonium salt) is obtained, and the nonwoven polyolefin fabrics appear to be plasticized by the treatment. The result is a better draping fabric which exhibits a significant improvement in tear resistance. The water repellancy of the polyolefin nonwoven fabric is not affected by the treatment.

The distinct roles of the ingredients in the flame retardant finish formulation can be demonstrated through thermogravimetric analysis. Tyvek®, a high density polyolefin nonwoven fabric, begins to burn in air at about 300°C and is completely decomposed at temperatures approaching 400°C. With the use of the presently preferred flame retardant finish formulation (i.e., treatment with ammonium bromide/tricresylphosphate/melamine formaldehyde resin), rapid decomposition of the high density polyethylene fabric is shifted to an elevated temperature of about 450°C. At the onset of combustion, the ammonium bromide decomposes and provides a gas to extinguish the flame in the range of about 200 to 300°C, while the tricresylphosphate decomposes at 300 to 400°C and provides additional gas to extinguish the flame.

The preferred formulation is an aqueous emulsion that contains 30% by weight non-volatile materials comprising (a) 45 wt.% ammonium bromide, (b) 17% by weight tricresylphosphate, (c) 23% by weight nonylphenolphenoxypolyethyloxyethanol, and (d) 15% by weight methylated melamine formaldehyde resin. The formulation is then diluted with water to a viscosity of 15-16 sec. using a #2 Zahn cup. This formulation is applied to both sides of a nonwoven polyolefin fabric using a conventional surface coating apparatus, such as a Myer rod coater and dried by passing the coated fabric through a conventional drying oven to drive off the diluent water. The effective drying temperature is generally below 250°F (121°C) and preferably at a web temperature of about 125°F (51.7°C).

The resulting nonwoven fabric has no oily or harsh feel, and appears to have been plasticized by the treatment. The result is a better draping fabric which exhibits about a 50% increase in Elmendorf tear performance.

The preferred add on dry weight level is 15 to 30% by weight, based on fabric. At this level, the nonwoven polyolefin fabric is found to be self-extinguishing in less than 2 seconds after flame in the vertical flame test (NFPA vertical flame Test No. 701).

The treatment on the fabric is essentially permanent. When exposed to water for 36 hours, the weight loss of finish is generally less than 2%. The treated fabric prints well and can be further treated with pigments and/or resins for graphic application and laminated with foil or film for packaging and protective apparel market applications.

The invention will be further understood with reference to the following non-limiting examples:

### Example 1

Tricresylphosphate, 56.0 parts by weight, (16.6% dry weight) and Triton N-101 RH (nonylphenolphenoxypolyethyloxyethanol), 4.0 parts by weight (1.2% dry weight), are mixed together and, while mixing, 26.0 parts by weight of water is added to the mixture. Mixing is continued and an additional 76.0 parts by weight (22.6% dry weight) Triton N-101 RH is added followed by 154.0 parts by weight water and 274.0 parts by weight 99% isopropanol. (Other water-soluble alcohols, such as methanol, ethanol and n-propanol, may be substituted for isopropanol. The water-soluble alcohol effectively lowers the boiling point of the diluent water and aids in evaporation). Then, while continuing mixing, 360.0 parts by weight (44.8% dry weight) ammonium bromide is added followed by 50.0 parts by weight (14.8% dry weight) Cymel 303 melamine formaldehyde resin. (Cymel 303 is commercially available from Ciba-Geigy Corporation). Additional water is added to achieve a viscosity of 15-16, using a #2 Zahn cup.

The above procedure is repeated, except the melamine formaldehyde resin is eliminated from the formulation. Tyvek® (Style 8744D), a nonwoven high density polyethylene fabric having a weight basis of 2.7 oz/yd² (0.092 kg/m²), is given a water soaking as reported in Table 1 with no treatment, and after being treated with both of the formulations prepared above.

4

Table I

| Cumulative Weight Loss After Soaking in Water | | | |
|---|---|---|---|
| | 12 hrs. | 24 hrs. | 36 hrs. |
| Tyvek®/No Treatment | 1.8% | 1.7% | 1.7% |
| Tyvek®/Finish Treatment With Melamine Formadehyde Resin | 1.4% | 2.0% | 2.3% |
| Tyvek®/Finish Treatment Without Melamine Formaldehyde Resin | 17.6% | 18.0% | 18.3% |

Water resistance, as measured by hydrostatic pressure test method AATCC 127, of the untreated Tyvek® was found to be 14.5 inches (0.368 m) and the finish treated (with melamine formaldehyde resin) Tyvek® was found to be 15.6 inches (0.396 m).

**Example 2**

This example shows the synergistic effect of ammonium bromide and tricresylphosphate in the NFPA 701 Vertical Flame Test. The above described nonwoven fabric was treated with tricresylphosphate alone (20 wt.% applied material), ammonium bromide alone (20 wt.% applied material) and ammonium bromide and tricresylphosphate (20 wt.% applied material together). The results are reported in Table 2. .

## Table 2

| Flame Retardant Treatment | NFPA 701 Vertical Flame Test | | |
|---|---|---|---|
| | After Flame* sec. | Char Length** inches | (m) |
| Tricresylphosphate alone | 9.7 | 7.3 | (0.185) |
| Ammonium Bromide alone | 4.9 | 7.0 | (0.178) |
| Ammonium Bromide/ Tricresylphosphate | 0.0 | 6.9 | (0.175) |
| Untreated Control | 19.8 | 8.1 | (0.210) |

* Duration of flame in seconds after 12 second of exposure to the flame.

** Vertical distance of burned or melted material after 12 seconds of exposure to the flame.

**Example 3**

Sheets of Type 10 Tyvek® (Style 1073 D), a nonwoven high density polyethylene fabric with a basis weight of 2.2 oz./yd$^2$ (0.075 kg/m$^2$) and sheets of Tyvek® (Style 8774 D) with a basis weight of 2.7 oz./yd$^2$ (0.092 kg/m$^2$) were coated on both sides with the melamine formaldehyde resin-containing finish formulation described in Example 1 at 150 ft/min. (0.762 m/sec) using a #18 Myer Bar for the front and a #6 Myer Bar for the back and dried through a drying oven at a web temperature of 125°F (51.7°C). The resulting treated fabric felt dry and had a 20-21 wt.% add on of dry finish. A Tyvek® (Style 1073 D) untreated control sheet having a basis weight of 2.2 oz./yd$^2$ (0.075 kg/m$^2$) was also prepared. The fabrics were tested for flame resistance and Elmendorf tear. The results are reported in Table 3.

## Table 3

### NFPA 701 Vertical Flame Test

| Fabric Style Tyvek® | Basis Wt. oz/yd$^2$ (kg/m$^2$) | | After Flame seconds | Char Length inches (m) | | Elmendorf Tear lbs.(kg) |
|---|---|---|---|---|---|---|
| 1073 D (Control) | 2.2 | (0.075) | 4.1 | 6.4 | (0.16) | 1.2(0.55) |
| 1073 D (Treated) | 2.8 | (0.095) | 0.0 | 6.1 | (0.15) | 1.8(0.82) |
| 8774 D (Treated) | 3.4 | (0.153) | 0.0 | 6.9 | (0.17) | – |

The data show zero seconds after flame in the NFPA 701 Vertical Flame Test and a 50% improvement in the Elmendorf tear of the treated fabrics.

**Example 4**

A paper board from Champion Paper Co. having the basis weight identified in Table 4 was coated on both sides as described in Example 3 using #18 and #3 Myer Bars, respectively. The resulting treated board was dry, had a 16% add on of dry finish, and was self-extinguishing in the NFPA 701 vertical flame test. The results are reported in Table 4.

## Table 4

### NFPA 701 Vertical Flame Test

| Substrate | Basis Weight oz/yd$^2$ (kg/m$^2$) | | After Flame seconds | Char Length in. (m) | |
|---|---|---|---|---|---|
| Untreated Paper Board | 5.6 | (0.19) | 14.0 | 10.0 | (0.25) |
| Treated Paper Board | 6.7 | (0.23) | 0.0 | 3.0 | (0.076) |

**Example 5**

A stitch sewn nonwoven polyolefin fabric as described in U.S. Patent No. 4,704,321, was treated with the melamine formaldehyde resin-containing finish described in Example 1. The resulting fabric had a 29 wt.% add on of dry finish and was self-extinguishing when tested in accordance with NFPA Test No. 1993. The results are reported in Table 5.

## Table 5

### NFPA 1993 Vertical Flame Test

| Fabric | Basis Wt. oz/yd$^2$ (kg/m$^2$) | Ignites In 3 sec | Burn Time sec | Ignites In 12 sec | Burn Time sec |
|--------|--------|--------|--------|--------|--------|
| Untreated | 2.2(0.075) | yes | 37.0 | N/A | N/A |
| Treated | 3.1(0.112) | no | --- | yes | 0.0 |

**Example 6**

The melamine formaldehyde resin-containing flame retardant described in Example 1 was diluted with water to give a flame retardant: water ratio (F/R:Water Ratio) as reported below in Table 6 to provide the dry wt.% add on reported in Table 6 as applied to Tyvek® having a basis weight of 2.7 oz/yd$^2$ (0.09 kg/m$^2$). The samples were tested for flame resistance using NFPA Test No. 701 and the results are reported in Table 6.

7

# EP 0 476 644 A1

## Table 6

### NFPA 701 Flame Test

| F/R:Water Ratio | Add On % | After Flame seconds | Char Length inches | (m) |
|---|---|---|---|---|
| 100:0 | 20 | 0.0 | 5.5 | (0.14) |
| 80:20 | 16 | 0.0 | 5.6 | (0.14) |
| 60:40 | 12 | 13.0 | 8.0 | (0.20) |
| 40:60 | 8 | 12.4 | 7.3 | (0.19) |
| Untreated (Control) | 0 | 19.8 | 8.1 | (0.21) |

Although particular embodiments of the present invention have been described in the foregoing description, it will be understood by those skilled in the art that the invention is capable of numerous modifications, substitutions and rearrangements without departing from the spirit or essential attributes of the invention. Reference should be made to the appended claims, rather than to the foregoing specification, as indicating the scope of the invention.

### Claims

1. A flame resistant nonwoven substrate having a dry add on of 15 to 30 weight percent of a flame retardant formulation comprising 40 to 50 weight percent of a water-soluble ammonium salt, 10 to 20 weight percent of a water-insoluble organic phosphate, 10 to 20 weight percent of a stable resin binder and 20 to 25 weight percent of a non-ionic surfactant.

2. The flame resistant nonwoven substrate of claim 1 wherein the substrate is paper board, film or a nonwoven polyolefin fabric.

3. The flame resistant nonwoven substrate of claim 2 wherein the water-insoluble organic phosphate is a $C_{3-10}$ alkyl or $C_{6-12}$ aryl phosphate.

4. The flame resistant nonwoven substrate of claim 3 wherein the water soluble ammonium salt is selected from the group consisting of ammonium phosphate and ammonium bromide.

5. The flame resistant nonwoven substrate of claim 4 wherein the stable resin binder is a melamine formaldehyde resin.

6. The flame resistant nonwoven substrate of claim 2 wherein the substrate is a nonwoven fabric formed of polyethylene plexifilaments.

7. A process for preparing a flame retardant formulation comprising the steps of:
   (a) mixing a water-insoluble organic phosphate and a non-ionic surfactant;
   (b) adding water while continuing mixing;
   (c) adding additional non-ionic surfactant while continuing mixing;

8

(d) adding additional water while continuing mixing;

(e) adding a water-soluble alcohol while continuing mixing;

(f) adding a water-soluble ammonium salt while continuing mixing;

(g) adding a stable binder resin while continuing mixing; and

(h) diluting with water to provide a formulation containing 20 to 35 weight percent non-volatile materials which materials consist essentially of 40 to 50 weight percent water-soluble ammonium salt, 10 to 20 weight percent water-insoluble organic phosphate, 10 to 20 weight percent stable binder resin and 20 to 25 weight percent non-ionic surfactant.

8. The process of claim 7 wherein the water-soluble ammonium salt is ammonium phosphate or ammonium bromide, the water-insoluble organic phosphate is selected from the group consisting of tri-(t-butyl-phenyl) phosphate, tricresylphosphate, trixylenylphosphate and tri(isopropyl-phenyl) phosphate and the stable resin binder is a melamine formaldehyde resin.

9. An aqueous flame retardant formulation containing 20 to 35 weight percent non-volatile materials which materials consist essentially of 40 to 50 weight percent water-soluble ammonium salt, 10 to 20 weight percent water-insoluble organic phosphate, 10 to 20 weight percent stable binder resin and 20 to 25 weight percent non-ionic surfactant.

10. A process of applying the flame retardant formulation of claim 9 to a nonwoven substrate in one step, followed by drying at an elevated temperature of up to 250°Fto provide a product containing a dry add on of 15 to 30 weight percent flame retardant non-volatile materials.

## DOCUMENTS CONSIDERED TO BE RELEVANT

EP 91115930.9

| Category | Citation of document with indication, where appropriate, of relevant passages | Relevant to claim | CLASSIFICATION OF THE APPLICATION (Int. Cl.5) |
|---|---|---|---|
| A | DERWENT ACCESSION NO. 82-08 878, Questel Telesystems (WPIL) DERWENT PUBLICATIONS LTD., London     * Abstract *         & JP-A-56-165 073 (KASHIMA KOGYO) -- | 1-5 | D 06 M   11/71<br>D 06 M   11/13<br>D 06 M   13/292<br>D 06 M   15/423<br>D 06 M   23/00<br>D 21 H   21/34<br>D 01 F    1/07<br>//D 06 M 101:06<br>D 06 M 101:20 |
| A | DERWENT PUBLICATIONS NO. 83-23 393, Questel Telesystems (WPIL) DERWENT PUBLICATIONS LTD., London     * Abstract *         & JP-A-58-013 786 (TORAY) -- | 1-4 | |
| A | DD - A - 228 576 (VEB KOMBINAT BAUELEMENTE)     * Claims * -- | 1,4,5 | |
| A | GB - A - 2 227 760 (ALBRIGHT & WILSON)     * Claims * -- | 1,3,4 | **TECHNICAL FIELDS SEARCHED (Int. Cl.5)**<br><br>D 06 M<br>D 21 H |
| A | US - A - 4 196 005 (MORGAN)     * Claims * ---- | 1,3 | D 01 F<br>D 06 N<br>C 09 K<br>C 09 D |

The present search report has been drawn up for all claims

| Place of search | Date of completion of the search | Examiner |
|---|---|---|
| VIENNA | 09-12-1991 | BECKER |

EPO FORM 1503 03.82 (P0401)